Europäisches Patentamt

(19) European Patent Office

Office européen des brevets

(11) Publication number: **0 048 118**
**A2**

## (12) EUROPEAN PATENT APPLICATION

(21) Application number: **81304045.8**

(22) Date of filing: **04.09.81**

(51) Int. Cl.³: **H 04 N 1/02**

(30) Priority: **15.09.80 US 187262**

(43) Date of publication of application:
**24.03.82 Bulletin 82/12**

(84) Designated Contracting States:
**DE FR GB SE**

(71) Applicant: **TEXAS INSTRUMENTS INCORPORATED**
**13500 North Central Expressway**
**Dallas Texas 75265(US)**

(72) Inventor: **Houghton, Richard A.**
**7716 La Avenida Drive**
**Dallas Texas(US)**

(74) Representative: **Abbott, David John et al,**
**Abel & Imray Northumberland House 303-306 High**
**Holborn**
**London, WC1V 7LH(GB)**

(54) **Facsimile design.**

(57) A digital fax having geometrically compatible transducers 51 and 52 that directly convert the discrete picture elements (pels). The geometric compatibility of the transducers is 51 and 52 combined with an odd pel count such that with equal and simultaneous movement via 62 of the transducers, the pels are selectively interlaced. The interlace is accomplished through selective incremential movement of the transducer improving the resolution and quality. Furthermore, the electromechanical drive 58 and 62 is integrated into a single system instead of the previously encountered dual system, thereby conserving power and reducing the number of components, resulting in a more economical fax machine.

*Fig. 5*

EP 0 048 118 A2

## FACSIMILE DESIGN

### BACKGROUND OF THE INVENTION

This invention relates to facsimile machines and more particularly to a novel implementation of the machines and the internal handling of its operations.

Facsimile machines have been well known and extensively used in the art. Two basic forms of the machine exist, the analog and the digital machine. Although the distinction between analog and digital relates primarily to the internal coding of the electrical signals, this encoding dictates the method of handling the data, the range of operations, and the applicability of each the machines.

Facsimile machines, commonly referred to as fax machines, are used currently to transmit, from a local fax, an electronic signal generated from and being a representation of a subject copy, to a remote fax machine which, in turn, decodes the signal and produces a hard copy thereof. In this manner, a hard copy is "transmitted" between two points. This transmission is characteristically over the phone lines but may be done via radio waves as well as other media.

Whether analog or digital in nature, a facsimile machine functionally consists of a printer means, a scanning means, a control means, and a means for interconnection. The control means may consist of numerous minor components and is coupled to all the other elements and acts as a monitor on the timing, operation and, typically, coordination of the data handling. For any of the other elements within the fax to communicate to each other, they typically do so via the control means.

A printing means may perform its function through numerous techniques known to those in the art, such as wire dot impact

-2-

printing, or electrostatic printing. In the digital form of the fax machine, the representative electrical signal and the print signal are digital in format. Similarly, in the analog format, the print signal and the representative signal are analog. Analog is a continuous function; digital a discrete function. The printing means is used to translate the electrical print signal to a hard copy, typically on paper, for the operator's use.

Scanning means are used to optically scan a subject copy, the original form to be transmitted, and translate the image into an analogous electrical signal representative of the target area scanned. This analogous representation, similarly, is either digital or analog in nature depending on the basic form of the fax machine.

Typically, digital fax machines utilize electromechanical scanning techniques and apparatus; the electromechanical approach involves bouncing a light off the subject copy so that the tonal quality of the subject copy may be sensed and generating therefrom an analogous electrical representation. Some comparator type operation is performed to determine if the scanned area is "black" or "white" by establishing a selected threshold level.

The device used in the electromechanical scanning of the digital fax, generally, is a Charge-Coupled Device (CCD). The CCD is fixed in a position within the device and typically is arranged in an array of 1728 x 1 sensors. The subject copy is then moved across the linear viewing area of the CCD which translates the image into an electrical representation. Note that the CCD does not physically move; its sole motion is relative to the subject copy which is moved past the CCD.

The analog fax also bounces light off the subject copy, and by way of rotating mirrors or the like, transforms the sensed signal into an analogous continuous electrical representation.

The analog fax is intrinsically limited in its range of application due to its continuous signal nature. A continuous electrical representation intrinsically makes it difficult or impossible to effectively accomplish such commonly needed operations as compression of data, encryption of data, communication to peripherals typically digital in nature, and the like; whereas, the digital fax, is readily amenable to these same operations due to its discrete format.

A control means is coupled to both the scanning means and the printer means to monitor and synchronize the timing and signal manipulation of the entire fax. Additionally, the control means may drive the individual elements. The control means functionally involves channeling the analogous electrical representation from the scanning means through some means for interconnection so that it may be communicated to a remote fax; similarly, the control means accepts a received signal from a remote fax, via the means for interconnection, and channels it to the printing means so that a hard copy may be made therefrom.

For a local fax to communicate to a remote fax, some means for interconnection whereby the units may communicate must be used. This means for interconnection allows the local fax to scan a subject copy and then to transmit the analogous representation to a remote fax; in like fashion, the local fax receives information from a remote fax and represents it in hard copy form via the printer. Typically, this interconnection means is comprised of some form of coupler, such as a modem, together with the telephone lines.

For a more in-depth description of fax machines, their operations, history, and development, refer to the work of Daniel

**0048118**

M. Costigan, <u>Electronic Delivery of Documents and Graphics</u>, published by·Van Norstand Reinhold Co., copyright 1978.

A current popular application envisioned for fax machines is a worldwide or national electronic mail system whereby fax machines routinely communicate via existing phone lines. In this fashion, hard copies are delivered without the present need to physically deliver a hard copy between two points. Although this method has been utilized for intracompany communications involving the larger companies, it has not been economically feasible for small businesses, households or routine intercompany communications.

Obvious from this discussion is the intrinsic requirement that at least a pair of fax machines exist and are interconnected; a single fax, by itself, is useless. A fax machine must interface with another fax to have any utility whatever. Similiarly, the two operations of scanning and printing have been maintained as separate independent operations.

**0048118**

## SUMMARY OF THE INVENTION

This disclosure uses the accepted definition of a system, to wit, a system is any set of devices or components which will operate on its own, independent of outside control or influence. Hence, even though a particular set of devices constitute a self-sustaining system, it may be a subsystem of a larger system. By way of example only, the Patent Office is a system since it is operable on its own without outside control; yet, it is a subsystem of the United States Government.

Fax as a Peripheral:

Even though fax machines have been well known and used in the art for some time, their range of application has generally been limited to the utility of solely communicating with another fax. The capabilities of a single fax have not been fully developed; in fact, a single fax has no practical utility. The construction herein expands the capability of a fax machine far beyond its current scope of utility.

A means for coupling which acts as an interface, such as an RS232C type device, is connected to a fax machine, either directly to the control means in the case of a digital fax or via an analog to digital (A/D) converter in the analog fax situation. This means for coupling allows the fax to communicate to a data processing means or other remote device such as a data base or a data processor.

Due to the facsimile machines ability to optically scan a paper medium, this construction allows paper to serve a medium of distributing software, imaging, and the like where it was

**0048118**

previously required to use magnetic tape, floppy disc, and the like. By printing the source code or machine language of the software in optically readable form, such as bar code, the paper medium may be fed into the fax which will translate the image into electrical signals for the data processor. In this fashion, a less expensive and more readily distributed medium may be utilized to communicate programs, data, and the like.

As noted earlier, the fax machine has never been thought of as suitable for use in any other situation than in such applications as electronic mail to send hard copy via the phone lines. In connecting the fax to a remote device, by a means for coupling, the fax then becomes a useful peripheral device for a data processing system. Since the fax contains many desirable attributes which the data processing system may utilize, the system is significantly enhanced by the addition of the fax.

Typically, data processors are digital and so are more readily susceptible to being connected to a digital fax than to an analog fax. An analog fax though, may be converted to output and receive digital signals through the use and connection thereto of some means for conversion, commonly referred to as A/D converter (Analog to Digital) or conversly a D/A (Digital to Analog). The means for conversion is connected to the facsimile control means to receive an analog signal therefrom and convert it to a digital format. Similarily, a digital signal can be converted to supply an analog signal to the fax control means. Numerous conversion means are obvious to those in the art, any one of which may be used in this context.

One such A/D which is suitable for this operation was disclosed by E. B. Neitzel in Patent No. 3,299,421 issued January 17, 1967. A suitable D/A is disclosed in Patent No. 3,473,153,

**0048118**

issued October 14, 1969, to S. E. Lehnardt et al. Both patents are incorporated hereinto by reference. Although these two patents are given as examples, it will be apparent to those in the art that numerous other devices exist which will perform within the spirit of the invention.

A "means for coupling", in this discussion, includes any device allowing the fax to communicate with another non-fax device. In the preferred embodiment, this means for coupling is an RS232C type device. The RS232C is a standardization by EIA for means for coupling or interfacing. A wide range of remote devices are structured to this standard which would allow numerous devices to be coupled readily to the fax. The means for coupling may be connected directly or indirectly to the facsimile control means to allow for ready communication and synchronization of the data processing, whether from the remote device to the fax or vice versa.

Numerous other means for coupling exist and are well known to those in the art. For a comprehensive review of these means for coupling standards, refer to Don Tarvers' article in Electronic Products Magazine of March, 1979, "Interface Standards for Line Drivers and Receivers", incorporated hereinto by reference.

Once the fax is coupled to a remote device, say a data processor, the applicability of the fax is vastly enlarged, allowing for a wide variety of operations such as entry of bar code into the processor via the fax, printing by the fax as directed by the processor, or other applications as are obvious to those in the art.

Also, by coupling the data processor or remote device to a cathode ray tube (CRT) or other visual display means, a subject copy input into the fax may be viewed by the operator, enlarged, interpreted, or modified through the use of the CRT and the processor. If so desired by the operator the modified copy or subject copy can then be printed out by the printing means of the fax, thus producing a hard copy for records or subsequent editing.

Some examples of remote devices which may be coupled to the fax are data banks, data processors, or computers. One such computer which will suitably perform as a remote device is the microcomputer TMS 990/100 commercially available from Texas Instruments Incorporated. Other remote devices are obvious to those in the art.

It is important to note that the fax of this invention now receives its data from a source which generated the data independent of optical scanning means. That is to say, the digital signal which is communicated to the means for coupling is developed by such devices as computers or data banks, not a remote fax. As noted earlier, the prior art fax dealt exclusively with data generated from optical scanning a subject copy. This invention though, expands the fax to handle data from other sources.

Observe that the remote device performs functions both independently or in conjunction with the fax; similarly, the fax performs its normal independent fax functions without utilizing the remote device. In this respect, both the fax and the remote device are systems; additionally, the fax and the device combined constitute a system; in broader applications, a network consisting of a plurality of interconnected fax machines with remote devices, is also a system. As noted earlier, a system is defined as a set of components which may function independently of another device's components, directions, or utility.

By creating a system or network having subsystems consisting of fax machines with remote devices, each such subsystem communicates to each such other subsystem through the use of an interconnection means as is currently used for fax to fax communication. This interconnection means is a modem, typically an acoustical coupler, commonly found associated with fax machines; or other such means whereby the fax machines are enabled to communicate between each other.

Fax As a Copier:

Another variation of the fax machine of this construction results from adding to the fax an operation change means, to convert the fax machine from facsimile operation to copier operation. To accomplish this mode change, the data generated from the means for scanning is channeled, via the control means, to the means for printing within the same facsimile machine. The operator inputs the subject copy and a duplicate thereof is made by the same machine.

To affect this change, in the preferred embodiment, a switch is made accessible to the operator. When the operator selectively activates this switch, the activation is sensed by the control means during its normal monitoring operation. The control means then channels the electrical representation of the subject copy not to the port associated with communicating to a remote fax, but to a port which is associated with the local printer. It should be noted that the control means must have both ports available and may selectively choose either one.

The selective channeling of the data to different ports may be effectuated through numerous methods known to those in the art, including buffers, registers or sequential transfer of data. In the preferred embodiment, a buffer is established for the local printer and a second buffer is established for the remote printer.

In this fashion, a single fax has utility as a copier, whereas before, a single fax had no utility without a second fax.

Although a switch, which may be manually activated, is used in the preferred embodiment, other methods or devices are obvious to those in the art which accomplish this flagging of the control means to actuate the operation change means.

As an Improved Digital Fax:

As noted earlier, the digital encoding of data allows a wider range of operation than the analog encoding. A digital fax therefore is much more desirable for use.

Whereas in the prior art the scanning and printing means are separate and distinct, the present construction creates an integral system having the scanning means and printing means intrinsically interwoven.

By shaping the printhead and scanhead to be geometrically compatible, the two operations are complementary to each other. That is, the scanner views a surface area having a target area of X utilixing with Y pels of resolution; in like fashion, the printer prints Y pels on a target with an area of X.

The reduction achieved by this method and associated device in encoding is significant, allowing a particular pel in the means for scanning to be consistently mapped to a particular corresponding pel on the printing means.

Through this one-to-one correspondence, the task of the control means is extremely simplified. A buffer of Y is formed, in which the data is packed and unpacked. The total buffer is

**0048118**

completely packed and similarly completely unpacked since each storage area in the buffer is one-to-one mapped between the means for scanning and the means for printing.

The preferred embodiment utilizes a 9 x 9 CCD with a lens combination as the scanner means; and, a 9 x 9 thermal printhead as the print means.

Improvement of the Drive Mechanism:

The prior art of parallel systems to accomplish the separate tasks of the facsimile is not desirable due to the resulting larger size and higher cost. This mechanism alleviates the need for parallel systems and integrates the two systems to create commonly used components, which reduce the total number of components necessary, thus creating a cheaper and smaller device. The invention transforms the separate drive mechanisms from parallel systems into a single integral system.

The means for printing and the means for scanning act as integrated operation means within the fax machine. In the integration of these two operation means, they are mechanically coupled to each other by way of a rigid body, examples of which are rods, belt/pulley mechanisms, or the like. The operation means, in facsimile operation the means for printing and the means for scanning, are formed to be geometrically compatible, so that both are moved the same distance as their respective operations are performed.

In this discussion, the term "rigid" is used to mean any body or mechanism in which the distance between the two operation means is fixed. That is, during movement of either, the other will track at the same distance. The preferred embodiment is a pulley system in which a belt is passed tautly around two pulleys. Connected to this belt are the two operation means. As the belt is then moved in either direction, both operation means will move and will maintain a fixed distance between themselves.

The two operation means, coupled together in this fashion, are then positioned relative to two means for holding paper such that the first operation means addresses one means for holding paper, while the second operation means addresses the second means for holding paper. It should be apparent to those in the art that first and second means for holding paper may in fact be a unitary mechanism in which the paper itself is held jointly but in different areas.

The positioning of the operation means also entails positioning them so that their movement, resulting from movement of the rigid body, will be parallel to their associated means holding paper. This allows the operation to be continuously performed during the movement of the operation means

The print means and the scan means are then both moved simultaneously and equally. The actual distance moved will be determined by the target area of the operation means. Since they are both geometrically compatible, both areas typically are equal. Hence, if the print means prints over a ¼" x ¼" area, the associated horizontal and vertical movement must be ¼".

Those in the art will realize that various alternative paper holding means may be employed in the above context without losing the spirit of the invention. The preferred embodiment for the paper holding means of the invention includes a first elongated roller, parallel to and in contact to a second elongated roller. In this fashion, as the first roller is rotated, the frictional contact between the rollers, possibly via paper inserted between the rollers, causes the other roller to rotate. This rotation of the rollers, pulls the paper between them. Paper guides are preferably arranged relative to the rollers to further assist in positioning the paper as it is fed between the rollers to make it more accessible to the operation means or the operator.

The arrangement of the paper guides, as known in the art, is such that the paper is appropriately positioned with respect to the rollers so that each of the operation means may be utilized. In the preferred embodiment, two sheets of paper, the source paper and the subject copy, are inserted side by side.

A reversible means for movement is then connected to the rigid body. Typically, this means for movement is a stepper motor, although other means for movement may cause the rigid body to move, the first and the second operation means will, in unison, move simultaneous and equal distances. In this manner, both operation means are moved in the same time and distance relationship to each other by a single motor. As in the example before, the stepper motor then moves the rigid body ¼" each step and waits until the operation is completed before moving the next step.

A position sensing means is coupled to either of the means for operation, or alternatively the rigid body, and to either means for paper holding so that their relative positions may be determined. Two points are selectively established which will act as margins. When the position sensing means determines that the operation means has reached either of these points, the directional movement of the means for movement will be reversed to the second point. In this manner, both operation means are swept back and forth across the paper. In either the first directional movement across the paper and/or the reverse second directional

**0048118**

movement of the operation means, the function or operation of the operation means is selectively performable. The preferred embodiment performs the operation, whether it be scanning or printing, in both directions to produce a faster reacting mechanism.

The position sensing means also controls the vertical movement of the means for paper holding relative to the already described horizontal movement of the operation means. When the first point is encountered, (i.e. the first margin), either one or both of the paper holding means is moved a preselected distance perpendicular to the horizontal motion caused by the means for operation on which the related operation may be performed. This performs the indexing of the paper.

In the preferred embodiment, the vertical movement, so described, is caused by another means for movement, such as a stepper motor, attached to the end of one of the rollers. The stepper motor, used for the vertical movement, would, at the appropriate time, cause rotary motion to occur therein. This rotary movement would then index the paper to a new line.

Paper guides are then arranged relative to the rollers so that paper fed between the first roller and the second roller is properly positioned for the paper related operation to be performed on the fed in paper. In regard, it has been found that platens acting as rollers with a diameter of 0.687" are suitable for this arrangement and operation. The rollers are held in place and allowed to rotate freely through the use of bearings positioned at the end of the roller's major axis. Centered bronze sleeve bearings with part number DB1010 from Allied Devices Corp. are suitable for this task. Metal or plastic is fabricated in the desired configuration so as to form proper paper guides which are

-15-

positioned relative to the rollers directing the paper is properly fed between the rollers.

The two operation means are then mechanically coupled together by a rod acting as a rigid body. The preferred operation means are a thermal printer and an optical scanner. These two operation means are then positioned so that the paper fed between the rollers is susceptible to being either scanned or printed upon depending on the particular operation involved.

Typically, the printhead and the scanner are held in position by a set of guides. These guides are rigidly fixed, relative to the rollers so that the operation means, whether it be the printhead or scanner, slides along the guides parallel to the paper on which the operation is being performed.

A reversible stepper motor is then coupled to the rigid body. A stepper motor from Clifton Precision with a part number of 20-SVAD has been found to be suitable for this type of operation. A like motor is suitable to cause the rotary motion in the rollers.

In the preferred embodiment, a roll of supply paper is positioned so that the means for printing has a continuous source of paper during its operation. Related to the roll of paper, a tear bar, is preferably added so that the operator may easily remove the printed paper after the printing is completed.

Generally, when a roll of paper is used to supply paper to a printer, a damper bar is used to compensate for the sudden pulling of the roll, caused by the rollers via the paper. Without the damper bar, the paper will have a tendency to rip.

Interlace Technique:

Due to the geometric compatability of the means for scanning and means for printing, a quality font is producable whereas it was cumbersome or impossible to do so in the prior art.

Through the use of an odd number of pels in both the scanner and printer, the distance moved horizontally and vertically may be appropriately adjusted to produce a mid-step pel between the normal-step pels. This intermediate pel will produce a higher quality font. In the preferred embodiment, the mid-step distance is half the target area of the printhead or alternatively the scanner, both being equal in size.

By way of example only, a thermal printhead is selected which contains a 9 x 9 array of pels with .01 inch centers, heat mesas of .007 inch and a resulting overall width at .090. The printhead is then moved .045 inches horizontally, representing half the array center to center distance, each column of pels will be aligned between the previous on-center pel column locations. Similarly if the printhead is moved vertically .045 inch, each row of pels will be aligned between the prior on-center pel rows.

Each iterative step of the horizontal or vertical movement need not be the half pel-to-pel distance. Obviously, two half steps will realign the rows or columns again. In the example discussed above, the movement of the printhead would be to .045, .090, .135, .180. etc.

Although the discussion above refers to a mid-point movement, it is obvious to those in the art that any movement which lies between the full step pels produces a higher quality font.

Similarly, although the discussion refers to the printhead, it is known in the art that a similar interlace movement of the scanner will result in higher resolution of the subject copy being developed. As the resolution improves, so does the quality of the resulting font.

## BRIEF DESCRIPTION OF THE DRAWINGS

Figure 1a is a functional schematic of the digital facsimile machine as a peripheral.

Figure 1b is a functional schematic of an analog facsimile machine as a peripheral.

Figure 2 is a functional schematic of the fax incorporating the operation change means for copier type operation.

Figure 3 is a schematic of the interconnection of the fax illustrated in Figure 1, with remote devices and other systems.

Figure 4a, 4b, 4c, 4d, and 4e are various pictorial representations of embodiments of the invention being coupled to different remote devices.

Figure 5 pictorially illustrates the drive mechanism of the facsimile machine.

Figure 6 pictorially illustrates the thermal printhead as used in the preferred embodiment.

Figure 7 is an electrical schematic of the preferred embodiment's silicon controlled rectifier (SCR) printhead.

Figure 8 illustrates the timing requirements of the facsimile machine.

Figures 9a, 9b, 9c, and 9d illustrate the method and advantages gained in the interlace technique.

## DETAILED DESCRIPTION OF THE DRAWINGS

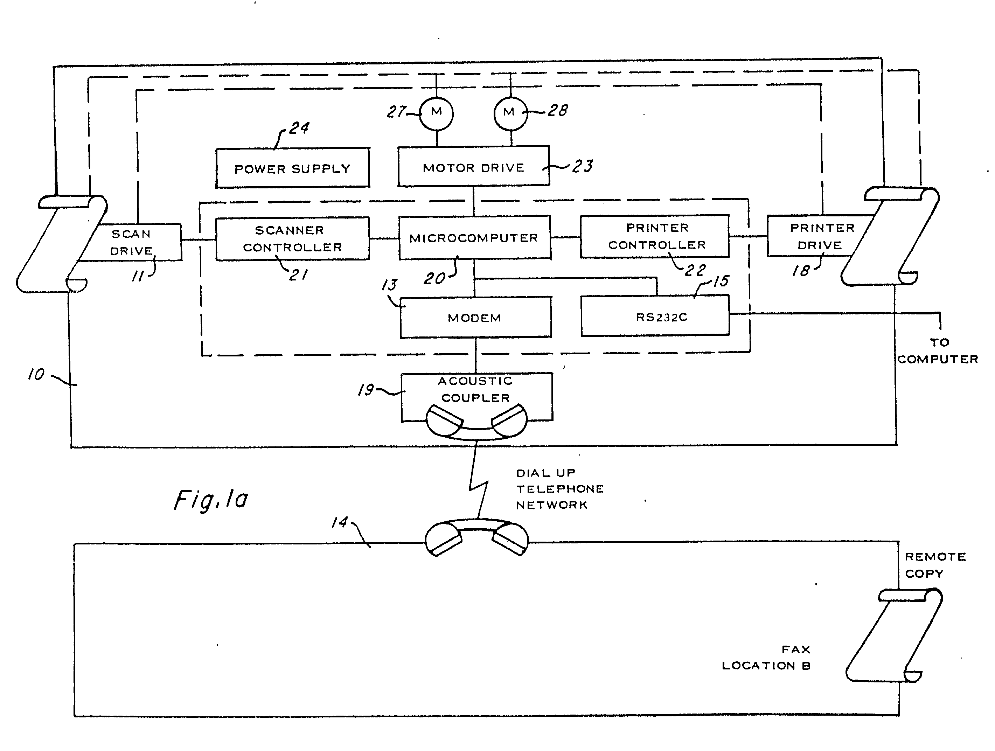

Figure 1a is a functional schematic diagram of the preferred embodiment wherein the facsimile machine 10 is an independent system but is modified to act as a peripheral device connectable to a remote device such as a computer or a data bank.

**0048118**

In Figure 1a, a subject copy is input into the means for scanning 11 which produces an analogous electrical representation which is communicated to a facsimile control means 12.

The control means 12 is comprised of a scanner controller 21 which is directed by the microcomputer 20. The microcomputer 20 also directs the printer controller 22 and interacts with the modem 13 and coupling means 15, illustrated here as a RS232C interface.

A power supply 24 provides the necessary power to run to various devices. A motor drive 23 is connected to the microcomputer 20 so that the horizontal and rotary motion may be appropriately controlled. These motions are supplied by the motors 27 and 28, respectively.

Under normal fax operation, the analogous representation developed by the scan device 11 is communicated via the microcomputer 20 to the modem 13, which passes the signal in the chosen medium, typically the existing phone lines, to a remote fax 14. The fax as a peripheral device requires that the representation from the control means be communicated to the means for coupling 15. A suitable coupling means 15 is the the illustrated RS232C type device. Use of a RS232C type device is beneficial since it complies with the accepted standardization for coupling means and significantly broadens the range of possibilities for interfacing.

Once coupled to the fax, a data processing means 17, such as a computer, supplies data to microcomputer 20 via coupling means 15. Under normal facsimile type operations, a data signal is communicated to the microcomputer 20 from a remote fax 14 via the modem 13. This data signal, whether originating from a remote device, which is a non-fax machine, or from a remote fax, is communicated to the means for printing 18 which via the printer controller 22, produces a hard copy for the operator's use.

Numerous devices are available for the functions involved in the facsimile operations of this type. Some examples of devices, but others are common to those in the art, which serve as a means for printing are electrostatic printers, and wire dot printers. An example of a suitable modem is an acoustical coupler.

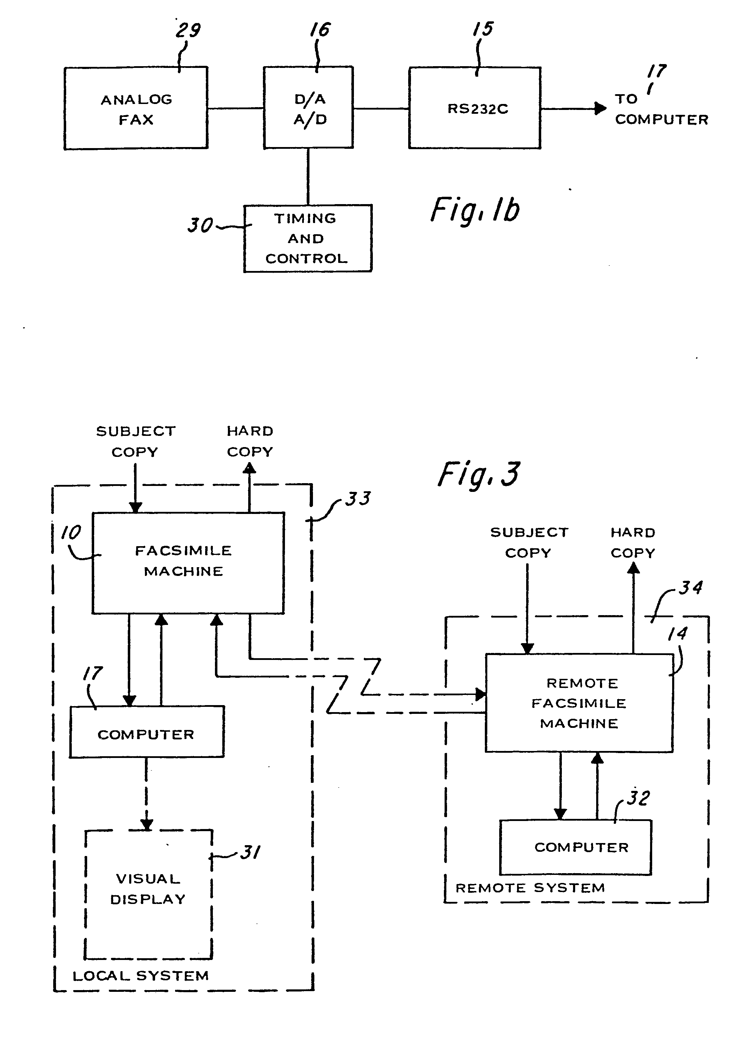

Figure 1b illustrates functionally the elements necessary for an analog fax to operate with an RS232C interface. Since the RS232C interface 15, is digital in nature, the signal it receives and transmits must be properly decoded and encoded by the D/A and A/D converter 16 as controlled by the timing and control 30 before it may be communicated to the RS232C 15 or the fax 29.

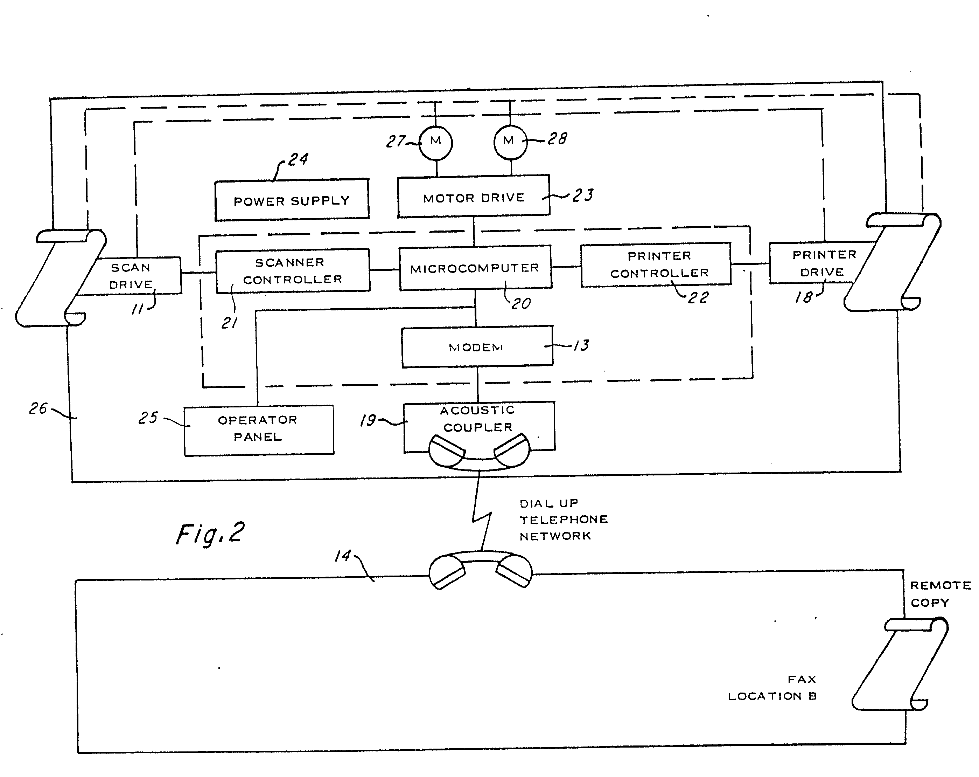

Figure 2 is a functional schematic wherein the facsimile machine has the capability to operate in the copier mode.

As before, a subject copy is input to the means for scanning 11 thereby producing an analogous electrical representation which is communicated to the microcomputer 20 via scanner controller 21. In this embodiment though, an operator inputs a signal via operator panel 25 indicating an operation change. When the operator selects this operation change, the representation received from the means for scanning 11 is directed to the means for printing 18 by the microcomputer 20 to produce a hard copy. Without this operation change means available to the operator at the operator panel 25, the representation developed by the means for scanning will be directed to become the output sent to a remote fax 14. Without the operator input to the operator panel 25, the facsimile machine 26 performs the normal facsimile operation as usual by directing the representation to a remote fax 14.

The choice of the operation change may be communicated through the use of a switch or other input means known to those in the art.

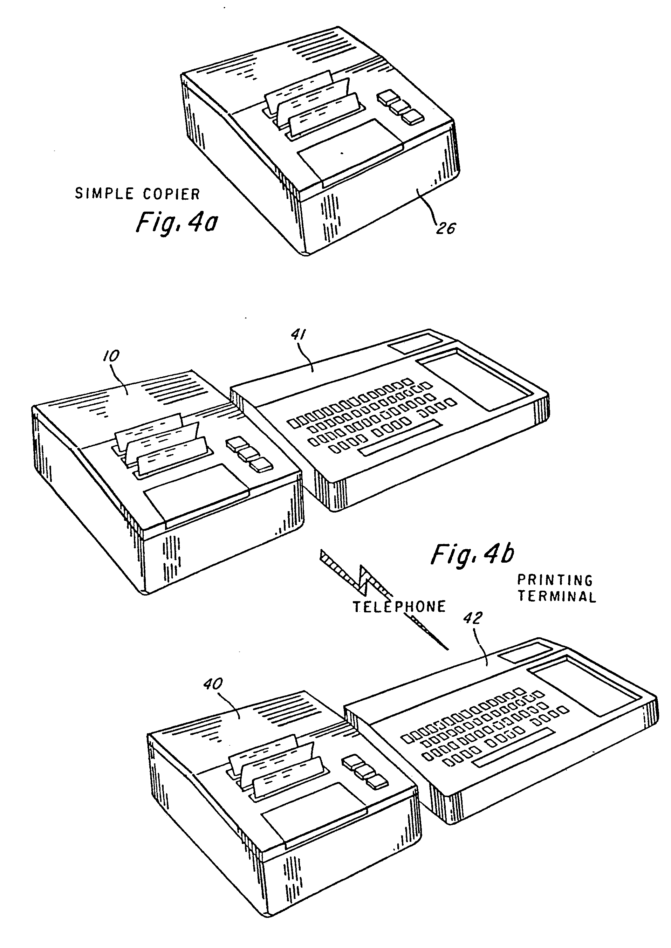

Figure 3 graphically illustrates how the fax machine 10 as illustrated in Figure 1a is incorporated, as a peripheral device, into a broader system.

The fax 10, functionally laid out as illustrated in Figure 1, receives input of a subject copy and outputs a hard copy. Additionally, it is coupled to a means for data processing such as computer 17 which is connected to the fax 10 and optionally to a visual display means 31. The three elements, the fax machine, the computer 17, and the optional visual display means 31 connected in this way form a local system 33.

This local system 33 is coupled to a remote system 34 comprised of a remote fax 14 with its remote means for data processing, computer 32. Hence, the computer 17 communicates with the remote computer 32 via fax 10 and fax 14. Additionally, a subject copy input to remote fax 14 is input to the computer 17 via fax 10 or an analogous operation in the other direction.

The interconnection between fax 10 and the remote fax 14 is accomplished by the same method as is currently utilized by such means as the phone lines or radio transmission although other means are known to those in the art.

The local system 33 is a subsystem of the larger system composed of local system 33 coupled to the remote system 34. In this manner of adding new systems to make an even larger system, the communication between subsystems may be carried on indefinitely.

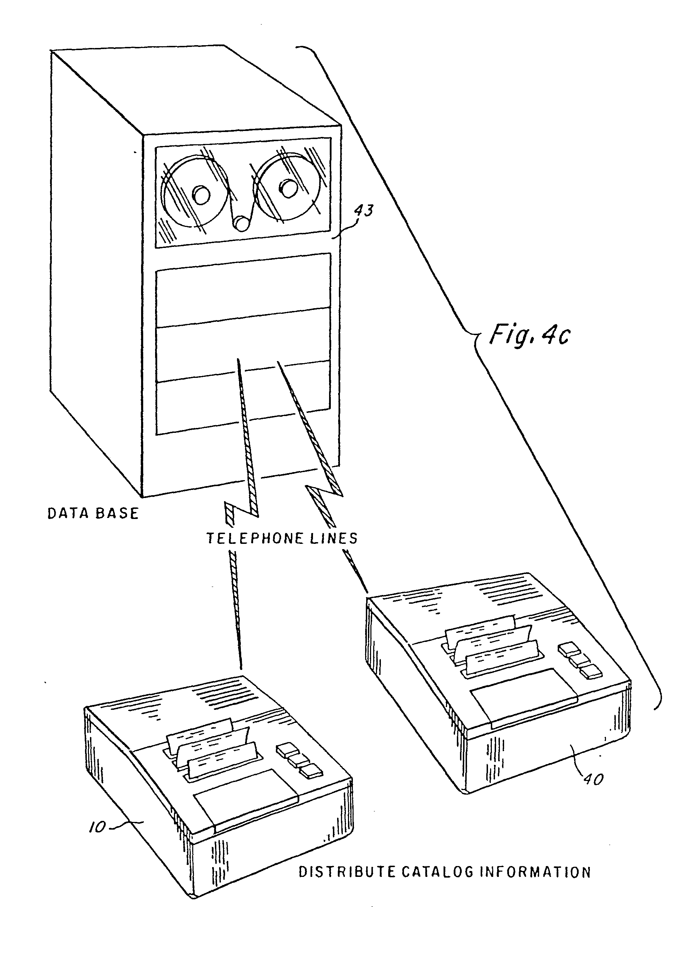

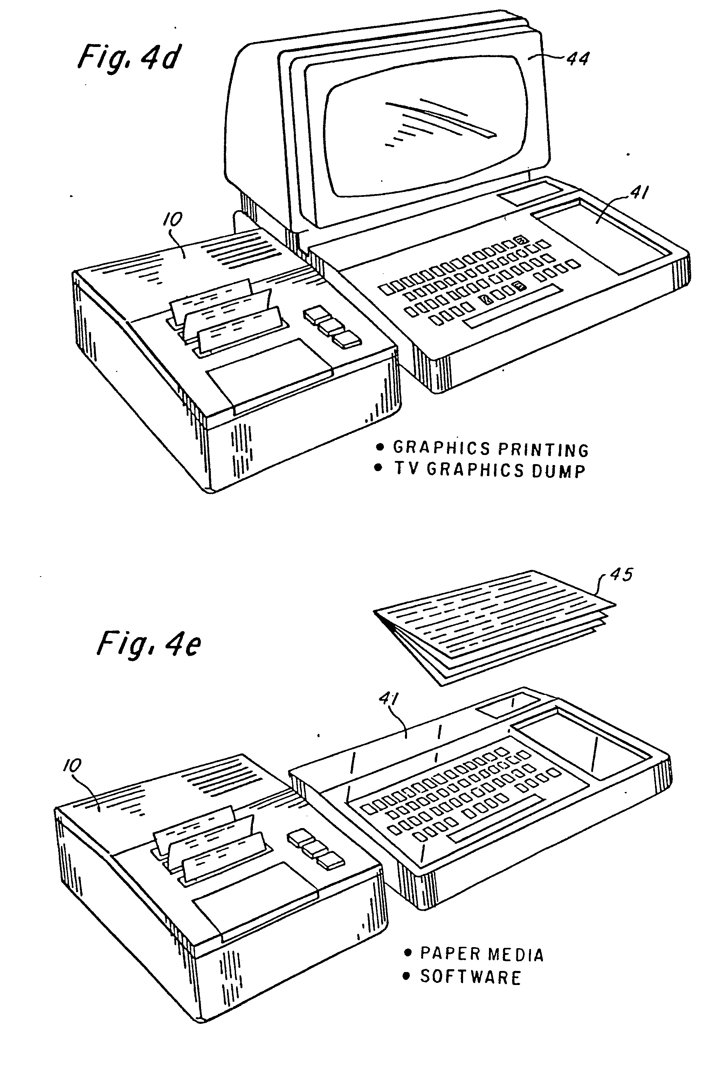

Figures 4a, 4b, 4c, 4d, and 4e are pictorial illustrations of some applications available to the invention as a peripheral,

**0048118**

although other combinations and applications are known in the art. This set of illustrations, Figures 4a-4e, is not intended to be limiting or controlling upon the invention.

Although the discussion references the field of computers as an example of means for data processing, it is known in the art that other such means are available; thus it is not a limitation upon the invention or its applicability. Many other devices, such as a data base may serve as remote devices connectable to the peripheral fax.

In Figure 4a, the fax machine 26 is functionally equivalent to the fax illustrated in Figure 2. This allows a single fax machine to have utility as a copier whereas, previously, the single fax had no utility whatsoever.

Figure 4b illustrates a system wherein both fax 10 and fax 40 are functionally equivalent to the fax described in Figure 1a. Fax 10 and fax 40 are coupled to computers 41 and 42 respectively. By way of example then, through this embodiment, the two computers, 41 and 42, communicate with each other, to their associated fax machines, or to the remote fax, allowing for a broad range of operations of the machines involved and expanded utility.

Figure 4c illustrates a typical operation wherein a large quantity of information is graphically communicated to a multitude of points via the telephone lines. This type of operation typically occurs in operations such as catalogue updates, engineering drawings, specifications, and the like. The information must be communicated to many points of interest relatively simultaneously. Data base 43 is coupled, via the telephone lines, to fax 10 and fax 40. Whenever information is to be transmitted, the data base supplies the data to the particular fax or group of faxs involved. In a related function, fax 10 transmits a representation of a subject copy to the data base 43 which communicates this representation to selected other fax machines such as fax 40 or others, not shown here.

Figure 4d illustrates a system of fax 10, computer 41, and cathode ray tube (CRT) 44. In this embodiment, a subject copy is scanned by fax 10 and then enlarged, modified, interpreted, or operationally worked upon by the computer 41 as directed by the operator and illustrated by the CRT 44. In another operation mode, an illustration derived upon the CRT 44 by the operator, as in the computer aided design practice, is routed, via the computer 41, to the fax 10 to develop a hard copy thereof for future reference or editing. The operator is then able to use this hard copy in his later work effort.

In Figure 4e, a fax 10 is coupled to a computer 41. A subject copy 45 may be input to the fax 10 to supply such things as a program in the form of bar code, or the like, for computer 41. Another application, besides program entry, is the use of computer enhancement for medical X-rays.

Through the construction described above, the fax machine becomes much more than simply a graphic communicator to another fax. Now it functionally acts as a copier and peripheral device capable of adding to a system a printing means, input means, and modem to other systems without losing its facsimile ability or quality. Due to its broadened applications, it now becomes feasible, economically, for small businesses to utilize the fax as in this invention, since this invention may be substituted for many devices commonly found in small businesses; thereby providing a single machine where many machines were formerly found or necessary.

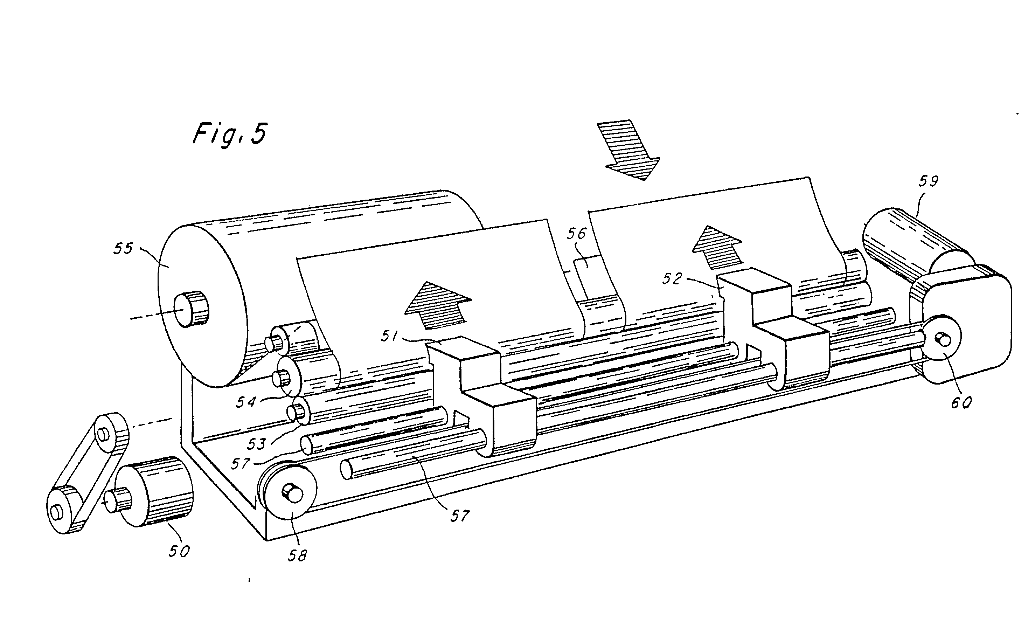

Figure 5 illustrates the drive mechanism of the invention.

-24-

Rollers 54 and 53 are in contact and parallel to each other. Paper fed between these two rollers, either from the paper source 55 or the subject copy 56, is then be drawn between the rollers 54 and 53 due to the frictional contact therewith. As the paper passes from the rollers, it is guided by guides, not shown here, so that it is susceptible to being printed upon or scanned by the printhead 51 or scanhead 52, respectively.

The printhead 51 and scanhead 52 are held in proper registry to the paper by the guides 57. Additionally the printhead 51 and scanhead 52 are interconnected by the pulley/belt mechanism composed of pulley 58 and pulley 60 having belt 62 wrapped therearound. In this fashion, since scanhead 52 and printhead 51 are attached to the belt 62, as the belt 62 is moved, movement also occours in the scanhead 52 and printhead 51. Note that their relative distances though remains the same. The printhead 51 and scanhead 52 equally and simultaneously move across the surface of the page by rotating pulley 60 . The ability to have simultaneous and equal movement is available since the printhead 51 and the scanhead 52 are geometrically compatible.

A position sensing mechanism, not shown here, communicates to the control means, also not shown, the actual position of the printhead 51 and scanhead 52 relative to the paper. At the proper position the control means directs the motor 50 to rotate a selected amount which causes the roller 54 to similarly rotate. This rotation pulls the paper through a preselected distance thereby causing the paper to index to a new line. At the same time, the control means reverses the directional movement of the motor 59 so that the printhead 51 and the scanhead 52 moves in the opposite direction across the page. Hence, the operation means of printhead 51 and scanhead 52 are swept horizontally back and forth

**0048118**

across the face of the paper and the paper is indexed vertically at the appropriate time.

The operation, whether it be scanning or printing, is performed during either directional movement of the motor 59. In the preferred embodiment, the operation is performed in both directions producing a faster operating fax machine.

The source paper on which the printhead prints, and subject copy, on which the scanhead 52 optically scans, both move in the same direction through the rollers 53 and 54. Although a rolled paper source 55 is illustrated, any means of supplying paper to the printhead will serve the task at hand.

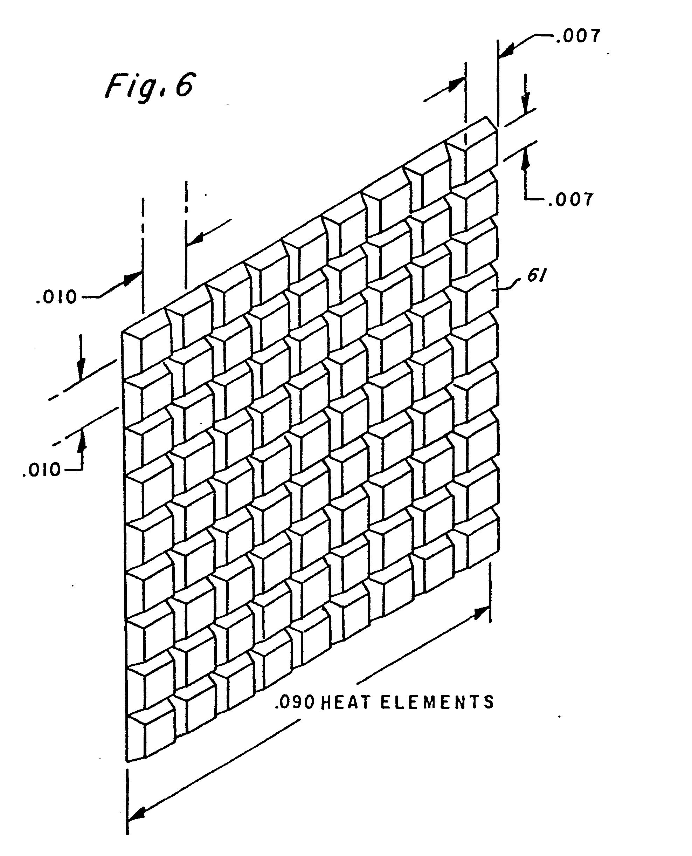

Figure 6 is a pictorial drawing of the printhead's thermal heating elements. The printhead contains a 9 x 9 array of heating elements forming the individual pels. In this example, the distance between the center of the pels is 0.01 inches and each pel has a heating mesa of 0.007 inches. As each pel, such as pel 61 heats, it creates a reaction in the associated paper, not shown here, which results in a darkening of the paper. In this manner, a selected pattern from the 9 x 9 array may be activated to produce a design on the target area of the paper.

Since the overall width of the printhead is 0.090 inches, the optical scanner of the scanhead should also address a target of approximately 0.090 inches. The optical scanner uses a 9 x 9 Charge-Coupled Device (CCD) within it so that each pel of the CCD would be one-to-one mapped to the corresponding pel of the printhead. In this fashion, the amount and the complexity of storing and encoding the data generated by the scanhead is significantly reduced.

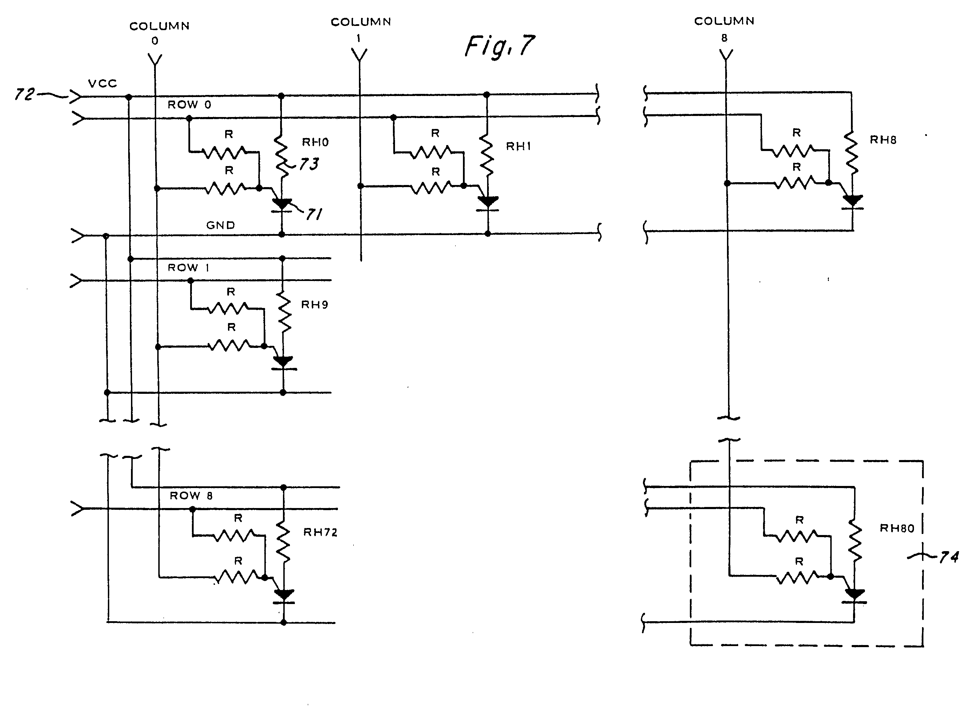

The preferred embodiment of the printhead uses Silicon Controlled Rectifiers (SCR) commercially available from Texas Instruments Incorporated. The electrical schematic for the SCR printhead is illustrated in Figure 7.

Again a 9 x 9 matrix is established such as pel 74, each element having a SCR 71 connected in the fashion indicated. The VCC 72 is initially set to high, an individual SCR, such as SCR 71, is triggered by activating the appropriate row and column. Hence, to set SCR 71, column 7 and row 0 must go high. As long as the VCC remains high, the SCR 71 will be set allowing the heating resistor to emit heat which thermally activates the affected area on the paper, not shown here. To reset the printhead, VCC 72 is set to low which unlocks all the previously set SCR's. The printhead is then moved the appropriate distance and the process is repeated.

Note that in this operation, the particular element is chosen by matrix addressing. This ability to matrix address significantly reduces the amount of monitoring and control which the control means must exercise. In this example, the control device need only monitor 9 + 9, or 18 lines for the setting operation and the VCC line for the erase operation.

The use of an SCR is used as the preferred embodiment and is not intended to be limiting or controling upon the invention. It is obvious to those in the art that numerous other methods and devices will perform the same task.

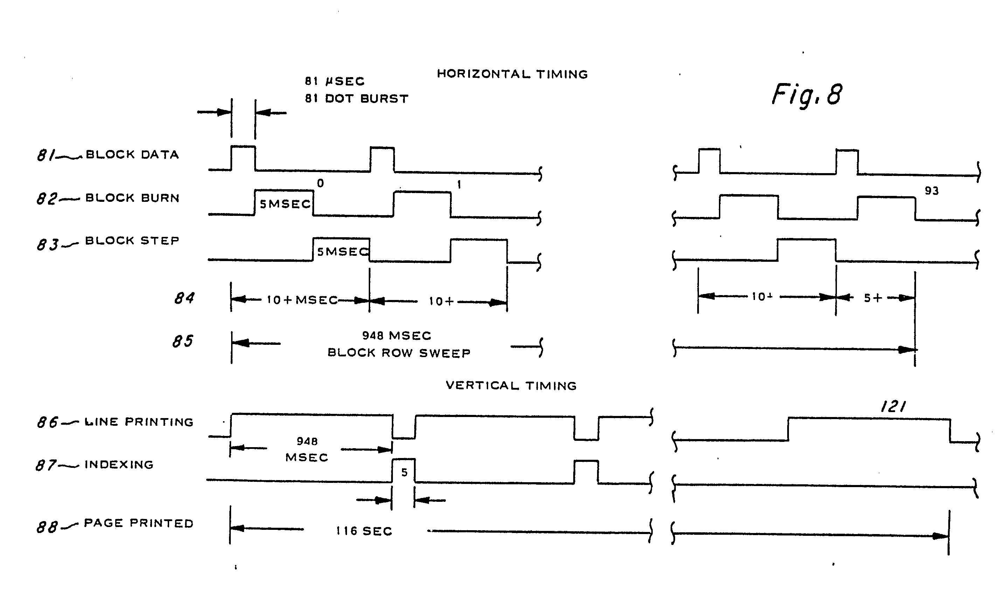

Figure 8 illustrates the timing considerations of the facsimile machine of the invention.

The printhead takes the longest time for its setting and heating so this becomes the controlling factor in the analysis. The longest time, whether it be scanning or printing, will be the controlling timing factor. The block data 81 is burst into the 9 x 9 array of heating elements in about 81 micro seconds. This sets or triggers the appropriate SCR's as discussed in Figure 7. A five millisecond burn 82 is then performed. The printhead and scanhead are moved at block step 83 which takes about five milliseconds  Hence, each step 84 takes a little over 10 milliseconds.

For 85, ninety-four steps are needed to cover a line of the page using the printhead having a width of 0.090 inches results in a row being done in 948 milliseconds.    Typically, there are 121 lines in the page, 86, and it takes the stepper motor about 5 milliseconds for it to rotate, 87, the rollers causing the paper to be indexed to a new line. This results in an entire page being printed, as in 88, in approximately 116 seconds or less than two minutes.

This speed is accomplished by printing in both directional movements of the printhead and also due to the ease in handling the data caused by the compatible geometric designs on both the scanhead and the printhead as discussed earlier.  In this manner, manipulation of the data is reduced to a minimum.

The use of these values as the times involved is not intended to be controlling or limiting upon the invention.  They are used only as examples to illustrate the concept behind the invention. Other timing and syncronizations are obvious to those in the art.

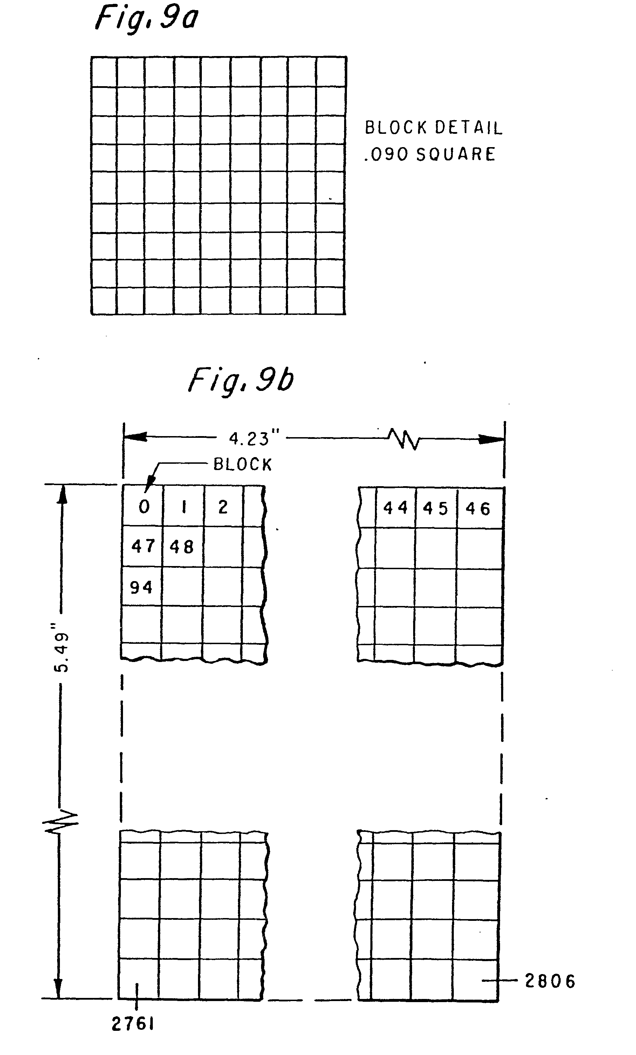

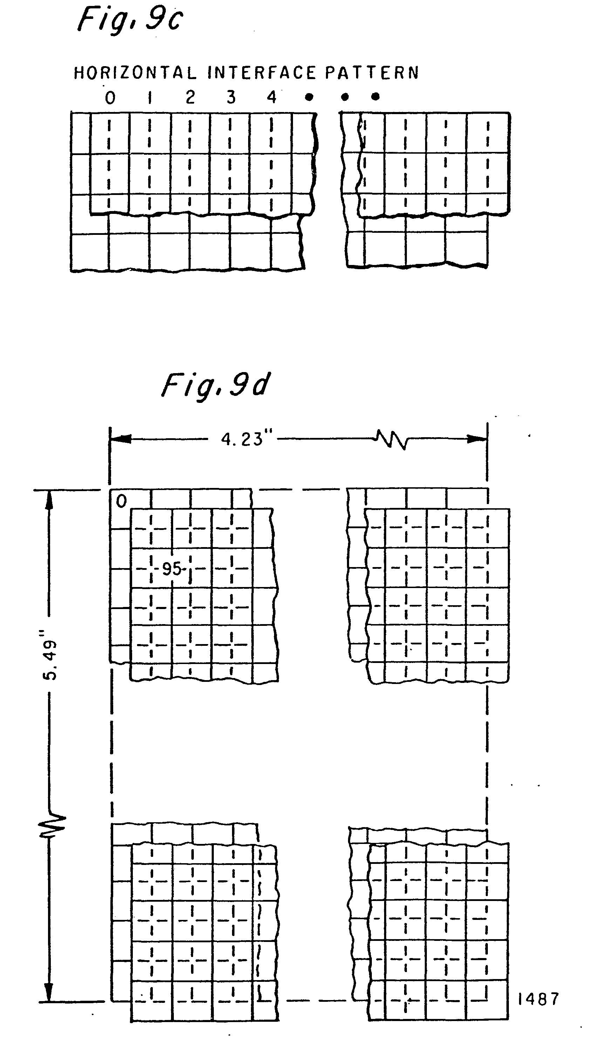

Figures 9a, 9b, 9c and 9d illustrate the interlace technique discussed earlier.

Figure 9a illustrates the face of the heating elements, having a 9 x 9 array of heating mesas, and the effective array scanned by the scanner.  This illustration utilizes the general printhead layout and schematic developed in Figures 6 and 7.  As is illustrated in Figure 9b, using the array of Figure 9a relative to a sheet of paper 4.23 inches wide and 5.49 inches in length,

-28-

which represents the area actually printed upon, takes fourty-six steps across and sixty-one rows resulting in a total number of steps of 2806 pers sheet of paper.

The array interlace is illustrated in Figure 9c. The printhead makes a first print resulting in a top row of 0,1,2,3, etc.. A "half" step is then performed so that the previous pel 0 now makes an intermediate mark of 0'. Similarly pel 1 may make 1' (not shown here), 2 may make 2', etc. This interlacing, horizontally, is feasible due to the sympathetic geometries of the printhead and the scanhead. This geometric resemblance allows ready one-to-one mapping so that the movement of one is always reflected in the other. Hence, the area or target addressed by one is always properly aligned for the other.

Although a halfway mark was chosen, it is obvious to those in the art that any intermediate point or set of points may be chosen all of which will result in a higher quality font being produced.

In like fashion, the vertical quality may be improved by moving the paper to a "half" step so that the scanner and printer are again addressing an intermediate line, as illustrated in Figure 9d.

It is clear from this discussion that the interlacing of the printhead is not mandatory upon the operation and may be selectively chosen or activated by the operator. Hence, if the operator is willing to wait longer for the copy to be developed, a much higher quality may be made by the interlace technique; but, if the operator is rushed for time, the normal full steps may be taken to produce a legible copy, but not to the same quality the interlace would produce.

**0048118**

WHAT IS CLAIMED IS:

1.  A facsimile machine comprising:

    (a) means for scanning having a scanning target of preselected geometry;

    (b) means for printing having a printing target of a geometry compatible to the preselected geometry of the means for scanning; and

    (c) means for driving said means for scanning and said means for printing in unison.

2.  The facsimile machine according to Claim 1 wherein said means for driving is comprised of:

    (a) pulley/belt apparatus comprising:

        (i) a first and second pully; and,

        (ii) a belt tautly wrapped around said first and second pulleys; and,

    (b) means for movement attached to said rigid body whereby movement may be supplied to said means for printing and said means for scanning via said pulley/belt apparatus.

3.  The facsimile machine according to Claim 2 wherein said means for movement is comprised of a stepper motor.

4.  The facsimile machine according to Claim 3 wherein said means for printing is comprised of a thermal printer.

5.  An apparatus for dual paper-related operations comprised of:

(a)   a rigid elongated body;

(b)   a first operation means having a first paper related functional capability, said first operation means mechanically connected to said elongated body;

(c)   a second operation means having a second paper related functional capability, said second operation means mechanically connected to said elongated body;

(d)   a means for movement coupled to said elongated body whereby a movement of said elongated body by said means for movement results in simultaneous and equivalent movement in both the first operation means and in the second operation means;

(e)   a first means for holding paper having a first unit of paper held therein, said first means for holding disposed so that during a lateral movement of the first operation means, as caused by said means for movement,

    (i)   said first functional capability is selectively performable upon the first unit of paper, and

    (ii)  said lateral movement of the first operation means is and parallel to said first unit of paper; and,

(f)   a second means for holding paper having a second unit of paper therein, said second means for holding disposed so that during a lateral movement of the second operation means, as caused by said means for movement,

(i)     the second functional capability is
        selectively performable on said second unit
        of paper, and

(ii)    said lateral movement of the second
        operation means is moved parallel to said
        second unit of paper.


6.    The apparatus for dual paper-related operations
according to Claim 5 wherein said means for movement is further
comprised of:

(a)   a reversible means for movement, such that movement
      is possible in two opposite directions; and,

(b)   a control means coupled to said reversible means
      for movement so that upon a happening of a first
      preselected event, the direction of movement is
      reversed until a happening of a second preselected
      event.


7.    The apparatus for dual paper-related operations
according to Claim 6, further comprised of:

(a)   a first increment movement means coupled to said
      means for movement and to said first means for
      paper holding so that,

(i)     on the happening of the first preselected
        event, said first means for paper holding is
        moved perpendicular relative to the lateral
        movement of said first operation means and a
        first preselected distance, and

(ii)    on the happening of the second preselected
        event, said first means for paper holding is

-32-

moved perpendicular relative to the lateral movement of said first operation means the first preselected distance; and,

(b) a second increment movement means coupled to said means for movement and to said second means for paper holding so that,

(i) on the happening of the first preselected event, said second means for paper holding is moved perpendicular relative to the lateral movement of said second operation means a second preselected distance; and,

(ii) on the happening of the second preselected event, said second means for paper holding is moved perpendicular relative to the lateral movement of said second operation means the second preselected distance.

8. The apparatus for dual paper-related operations according to Claim 7 further comprised of a paper source means disposed to supply paper to said first means for paper holding.

9. The apparatus for dual paper-related operations as claimed in Claim 8 wherein said first operator means is comprised of printing means.

10. The apparatus for dual paper-related operations as claimed in Claim 9 wherein said printing means is comprised of thermal printing means.

**0048118**

11. The apparatus for dual paper-related operations as claimed in Claim 10 wherein said second operation means is comprised of an optical scanner.

12. The apparatus for dual paper-related operations as claimed in Claim 11 wherein said means for movement is comprised of a stepper motor.

13. A paper drive mechanism for facsimle operation comprised of:

(a) a first elongated roller having a major axis therein, and having a first and second end;

(b) a second elongated roller having a major axis therein and disposed so that the major axis of the first roller is parallel to said major axis of the second roller and positioned so that the first roller contacts the second roller;

(c) means for scanning position so that paper fed between said second roller and said first roller at a first area of contact is selectively scannable.

(d) means for printing position so that paper fed between said first roller and said second roller at a second area of contact is selectively printed upon;

(e) a rigid elongated body mechanically coupled to said means for scanning and to said means for printing;

(f) a reversible motor coupled to said rigid body; and,

(g) a position determining means coupled to said rigid body and to said first roller, further connected to said motor so that on the happening of a selected

-34-                                        0048118

first event, said motor reverses direction of movement to a happening of a selected second event.

14. The paper drive mechanism according to Claim 13 further comprised of a paper source disposed to supply paper at said second area of contact such that said means for printing may print on the paper from said paper source.

15. The paper drive mechanism according to Claim 14 wherein said first roller and said second roller are comprised of platens.

16. The paper drive mechanism according to Claim 15 further comprised of a second stepper motor attached to the first end of said first roller.

17. The paper drive mechanism according to Claim 16 wherein said means for printing is comprised of thermal printing means.

18. A method for operating a facsimile machine having two operation means each having multiple pels, wherein one of the operations is a selected operation which is to be performed upon a unit of paper, comprising the steps of:

(a) positioning the selected operation means relative to the unit of paper such that the operation may be performed on an addressed area thereof,

(b) performing the operation on the addressed area

(c) moving the preselected operation means a distance less than the width of the addressed area; and,

(d) selectively performing the operation on said unit of paper.

19.  The method for operating a facsimile machine according to Claim 18 wherein said distance moved is equal to one half the width of the addressed area.

20.  The method for operating a facsimile machine according to Claim 19 wherein the step of moving the preselected operation means is further comprised of moving horizontally the preselected operation means.

21.  The method for operating a facsimile machine according to Claim 20, wherein said multiple pels are arranged in a 9 x 9 array.

Fig. 1a

Fig. 1b

Fig. 3

Fig.2

SIMPLE COPIER
*Fig. 4a*

26

10

41

*Fig. 4b*

TELEPHONE

PRINTING
TERMINAL

40

42

DATA BASE

TELEPHONE LINES

DISTRIBUTE CATALOG INFORMATION

Fig. 4c

43

10

40

*Fig. 4d*

44

10

41

- GRAPHICS PRINTING
- TV GRAPHICS DUMP

45

*Fig. 4e*

41

10

- PAPER MEDIA
- SOFTWARE

Fig. 5

Fig. 6

.007

.007

61

.010

.010

.090 HEAT ELEMENTS

Fig. 7

HORIZONTAL TIMING

*Fig. 8*

81 μSEC
81 DOT BURST

*81* — BLOCK DATA

*82* — BLOCK BURN    0    5MSEC    1

*83* — BLOCK STEP    5MSEC

*84*    ←10+MSEC→  ←  10+  →

*85*    948 MSEC
BLOCK ROW SWEEP

←10±→  ← 5+ →

93

VERTICAL TIMING

*86* — LINE PRINTING    948 MSEC

*87* — INDEXING    5

*88* — PAGE PRINTED    116 SEC

121

*Fig. 9a*

BLOCK DETAIL
.090 SQUARE

*Fig. 9b*

4.23"

BLOCK

| 0 | I | 2 |
| 47 | 48 | |
| 94 | | |

| 44 | 45 | 46 |

5.49"

2761

2806

## Fig. 9c

HORIZONTAL INTERFACE PATTERN

0  1  2  3  4  •  •  •

## Fig. 9d

4.23"

5.49"

0

95

1487